(19) Europäisches Patentamt

European Patent Office

Office européen des brevets

(11) Numéro de publication : **0 369 855 B1**

(12) **FASCICULE DE BREVET EUROPEEN**

(45) Date de publication du fascicule du brevet :
**19.08.92 Bulletin 92/34**

(21) Numéro de dépôt : **89403054.3**

(22) Date de dépôt : **07.11.89**

(51) Int. Cl.⁵ : **B23P 19/08**

(54) Unité automatique de distribution et de pose de segments notamment composites sur des pistons de moteurs.

(30) Priorité : **18.11.88 FR 8815031**

(43) Date de publication de la demande :
**23.05.90 Bulletin 90/21**

(45) Mention de la délivrance du brevet :
**19.08.92 Bulletin 92/34**

(84) Etats contractants désignés :
**AT BE CH DE ES GB GR IT LI NL SE**

(56) Documents cités :
**EP-A- 341 161**
**GB-A- 2 099 142**
**US-A- 1 634 566**
**US-A- 4 084 727**

(56) Documents cités :
**PATENT ABSTRACTS OF JAPAN, vol. 8, no. 54
(M-282)[1491], 10 mars 1984, page 49 M 282;
JP-A-58 206 331 (NIPPON PISTON RINGK.K.)
01-12-1983**

(73) Titulaire : **RENAULT AUTOMATION
8/10 avenue Emile Zola
F-92109 Boulogne-Billancourt (FR)**

(72) Inventeur : **Garnier, Marc
14, Allée de la Butte Rouge
F-91000 Evry (FR)**

(74) Mandataire : **Saint Martin, René et al
Régie Nationale des Usines Renault 8 & 10,
avenue Emile Zola
F-92109 Boulogne Billancourt (FR)**

EP 0 369 855 B1

Jouve, 18, rue Saint-Denis, 75001 PARIS

**Description**

La présente invention se rapporte à une unité automatique de distribution et de pose de segments notamment composites sur des pistons de moteurs à combustion interne présentés par un robot sur cette unité du type intégrée dans une ligne d'assemblage robotisée, et pourvue de moyens automatiques de préhension des pistons, de détection du type de pistons prélevés, d'initialisation et de référencement en hauteur des gorges des pistons sur les ogives d'empilement de segments, de sélection et de présentation des ogives.

La demanderesse a déjà étudié et réalisé des machines automatiques semblables qui utilisent des ogives sur lesquelles sont empilés des segments d'étanchéités simples, voir par exemple le document EP-A-0341161, qui est compris dans l'état de la technique comme défini à l'Art. 54 (3) CBE.

Bien que ces machines puissent tenir compte des variantes de moteurs, de pistons et de segments, elles ne conviennent pas à la distribution et à la pose de segments composites tels qu'un segment racleur constitué de deux anneaux plats et minces, séparés par un expandeur élastique.

En effet, les expandeurs présentés sous forme de pile ont tendance à s'emboîter les uns dans les autres ce qui interdit de les distribuer avec un système classique à tiroir tel que décrit dans le document JP-A-58.206.331.

Le document US-A-1.634.566 décrit un dispositif distributeur de pièces cylindriques emboîtées grâce à l'utilisation de rampes hélicoïdales. Ces rampes agissant sur les bords latéraux des pièces entraînent ces dernières une à une.

Malheureusement ce dispositif entraîne la rotation de la pièce ce qui est incompatible avec la distribution de segment fragile en torsion et dont la position angulaire doit être indexée précisément pour assurer leur montage.

L'invention a donc pour but de remédier à ces inconvénients, de la manière la plus simple.

L'objet de la présente invention est donc une unité automatique telle que définie à la revendication 1.

Cette disposition permet une séparation efficace de ces expandeurs pour la pose de segments composites sur les pistons.

Suivant une autre particularité, cette unité comporte un dispositif de mise en place automatique de segments ouverts expansés au passage sur une ogive correspondante, qui est constitué essentiellement par une pluralité de doigts en matériau élastomère et à configuration de corolle inversée.

Ce dispositif permet très simplement de prélever les segments au travers du tiroir d'amenage et d'en assurer l'expansion sur la longueur de l'ogive réceptrice.

D'autres particularités et avantages de l'invention ressortiront plus clairement à la lecture de la description qui suit d'un mode de réalisation préféré, donné à titre d'exemple non limitatif, en référence aux dessins annexés dans lesquels :

– la figure 1 représente un exemple de montage d'un segment racleur composite et de deux segments d'étanchéité conventionnels sur un piston,
– la figure 2 représente une vue de face de l'unité conforme à l'invention,
– la figure 3 représente une vue de dessus de cette unité,
– les figures 4 et 5 représentent des vues de détail en coupe axiale du dispositif de séparation d'expandeurs élastiques,
– les figures 6, 7 et 8 représentent des vues de détail montrant un doigt accessoire au dispositif de séparation illustré sur les figures 4 et 5,
– la figure 9 représente une vue partielle de côté de l'unité illustrée à la figure 2.

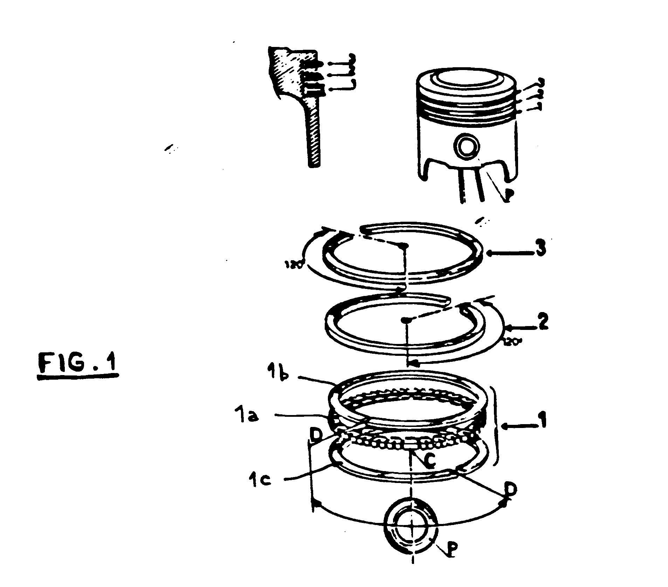

La figure 1 montre un segment composite racleur 1 qui comporte une partie élastique intermédiaire 1a, appelée expandeur, tenue entre deux anneaux plats minces 1b et 1c, ainsi qu'un segment d'étanchéité 2 et un segment coup de feu 3.

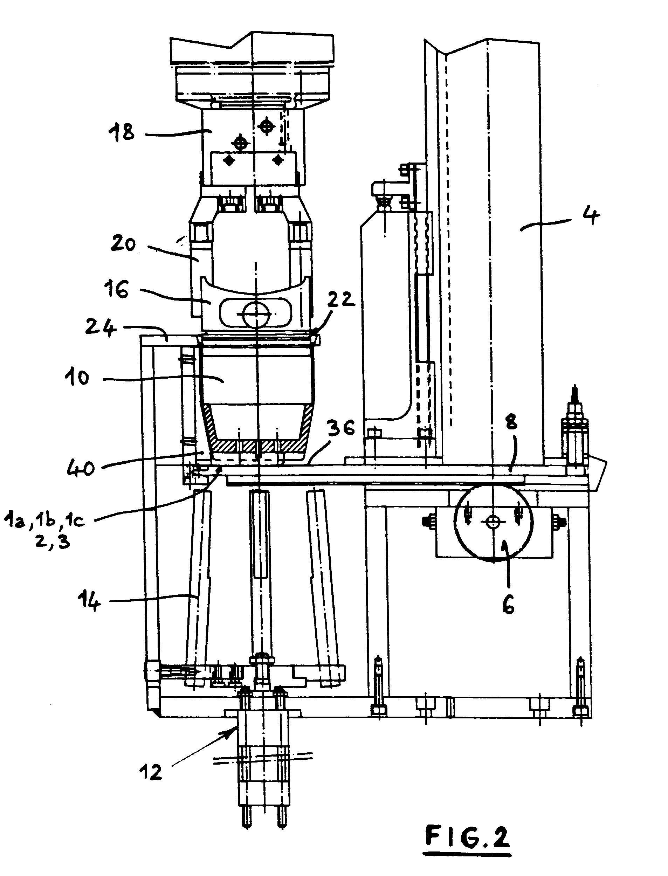

L'unité automatique de distribution et de pose de segments illustrée à la figure 2 est intégrée dans une ligne d'assemblage comportant plusieurs sites robotisés suivant les cadences recherchées, chaque site, comprenant :

– une machine de distribution unitaire de segments capable de détromper les différents types de segments, d'approvisionner en continu le site, et d'assurer le changement de type de segment,
– un robot ayant pour fonctions de saisir un à un les pistons, de les déposer sur un poste d'initialisation, et de les reprendre pour les présenter successivement dans l'alésage des ogives de mise en place des segments en fournissant une position en hauteur précise de la gorge dans laquelle est déposé le segment correspondant, à partir de chacune de ces ogives.

Les segments arrivent préalablement empilés dans des magasins 4 orientés suivant les fentes.

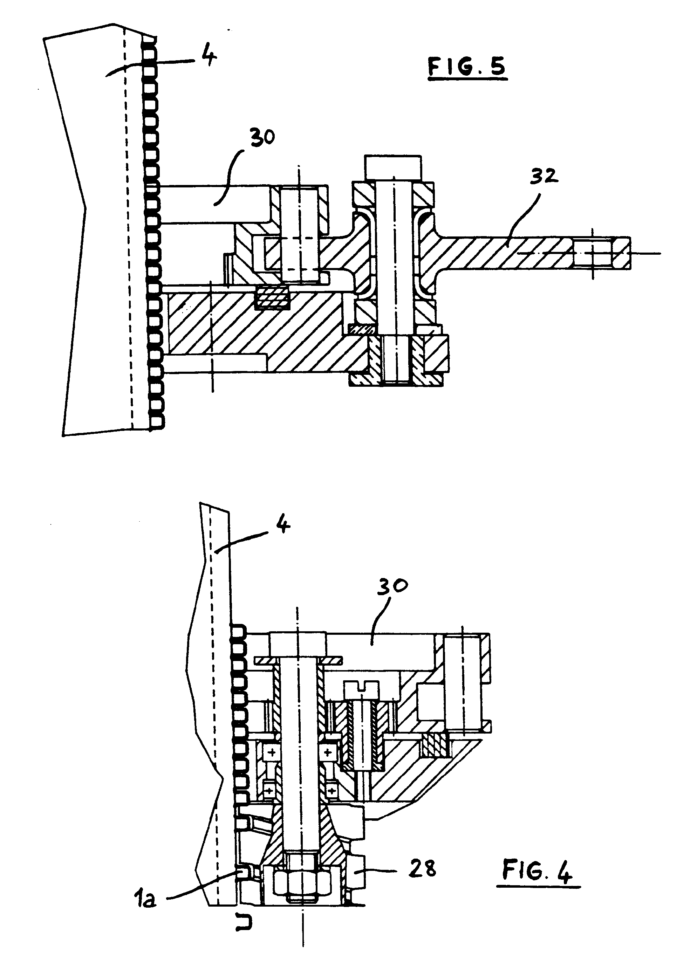

Ils sont séparés au moyen d'un dispositif spécifique de séparation 6 illustré sur les figures 2 à 8 dans le cas des expandeurs la couramment désignés "segments U-flex", ou par l'intermédiaire d'un tiroir 8 dans le cas des anneaux minces 1b et 1c.

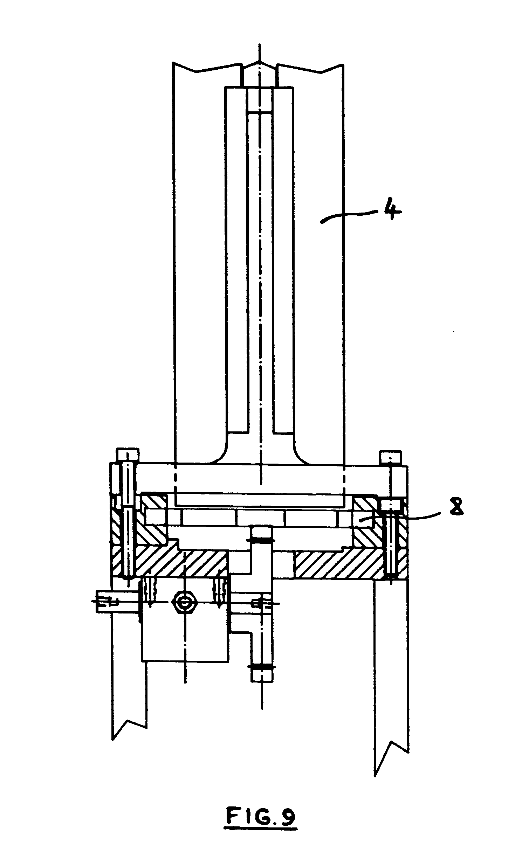

Ces segments sont amenés par ce tiroir automatique 8 sous une ogive d'expansion 10 (figures 2 et 9).

Un dispositif annexe 12 pourvu d'un vérin porte un ensemble de six doigts 14 en matériau élastomère tel que le polyuréthane. La disposition de ces doigts en corolle inversée permet, d'une part, de prélever le segment au travers du tiroir 8 et, d'autre part, d'en assurer, grâce à l'élasticité de ce matériau, l'expansion sur toute la longueur de l'ogive 10 (figure 2).

Un piston 16 à équiper de segments est saisi par une pince 18 à quatre doigts 20 se déplaçant parallèlement deux à deux. Puis, il est déposé sur une surface de référence où il est ressaisi par cette pince à un niveau connu (figure 2).

Cette opération a pour but de placer les gorges 22 devant recevoir les segments à une cote connue.

Le piston 16 est alors transféré au-dessus de l'ogive 10 dans laquelle il descend jusqu'au niveau de pose du segment correspondant.

En fin d'expansion, le dispositif 12 de mise en place automatique de segments vient assurer une mise en butée du segment contre un plafond de reconformage 24, et garantit le lâcher de ce segment en extrémité d'ogive. Le piston 16 est alors dégagé de l'ogive, avec le segment monté (figure 2).

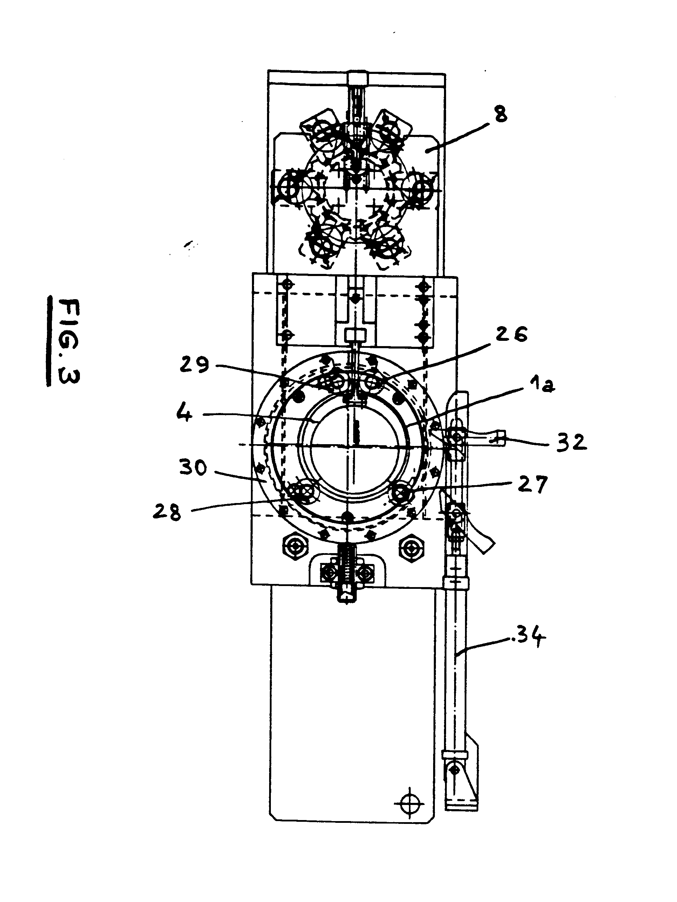

Comme le montrent les figures 3, 4 et 5, le dispositif de séparation des expandeurs 1a comprend deux paires de rampes hélicoïdales à sens d'enroulement contraires (deux à droite 26, 27 et deux à gauche 28, 29) qui sont entraînées simultanément par une couronne dentée 30.

Il incorpore aussi un mécanisme à échappement 32 commandé par un vérin 34 qui fait effectuer à cette couronne dentée la portion de tour correspondant à un tour de rampe hélicoïdale.

Durant cette manoeuvre, l'expandeur 1a a été pris dans la rampe et a donc avancé d'un pas d'hélice.

Deux hélices sont opposées en sens aux deux autres pour équilibrer les efforts de frottement produits entre lesdites rampes et l'expandeur dont la rotation n'est pas souhaitée.

La sortie des rampes hélicoïdales correspond à l'extrémité du magasin 4 (maintien par l'intérieur de l'expandeur). L'expandeur 1a vient ensuite se loger dans une empreinte 36 ménagée dans le tiroir d'amenage automatique 8 (figure 2).

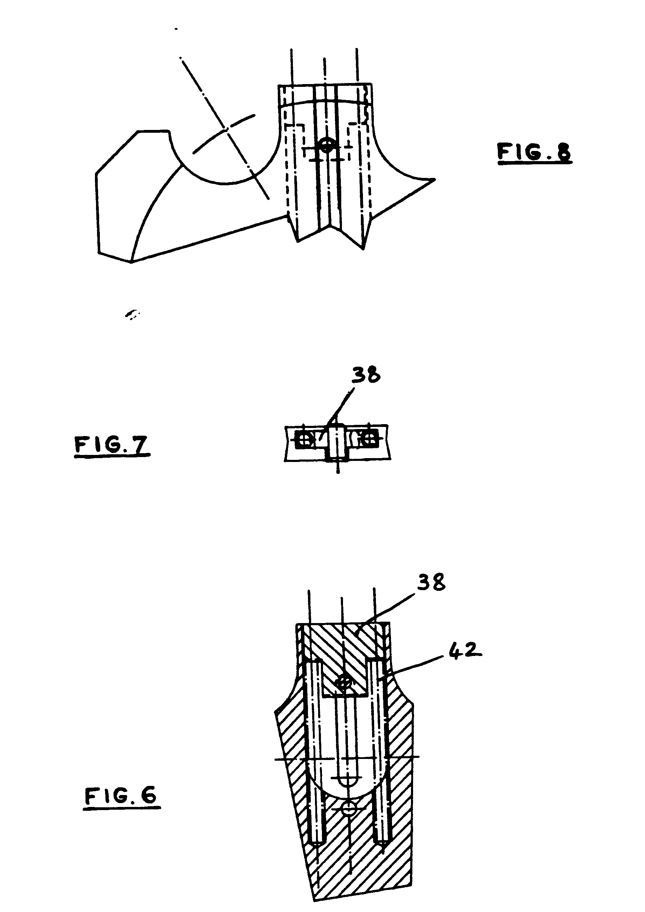

Pour assurer la continuité de l'orientation de l'expandeur, un doigt 38 maintient celui-ci au cours du transport sous l'ogive 10 où il est escamoté par un couteau 40. Il est rappelé dans sa position initiale par deux ressorts 42 (figures 6, 7 et 8).

Le cycle de fonctionnement se poursuit alors comme expliqué précédemment.

**Revendications**

1. Unité automatique de distribution et de pose de segments notamment composites, sur des pistons de moteurs à combustion interne, du type intégrée dans une ligne d'assemblage robotisée, et pourvue de moyens automatiques de préhension des pistons, de détection du type de pistons prélevés, d'initialisation et de référencement en hauteur des gorges des pistons sur les ogives d'empilement de segments, de sélection et de présentation des ogives comprenant un dispositif de séparation d'expandeurs élastiques utilisant des rampes hélicoïdales destinées à coopérer avec les bords latéraux des expandeurs, ledit dispositif de séparation d'expandeurs élastiques (1a), couramment dénommées "segments U-flex", étant constitué par deux paires de rampes hélicoïdales (26, 27) et (28, 29) à sens d'enroulement contraires, entraînées simultanément par une couronne dentée (30), et par un mécanisme à échappement (32) commandé par un vérin (34) susceptible de faire effectuer à cette couronne, la portion de tour correspondant à un tour de rampe hélicoïdale.

2. Unité suivant la revendication 1, caractérisé en ce qu'elle comprend un second dispositif de séparation de segments plats tels que des anneaux minces (1b, 1c) qui est constitué par un tiroir automatique d'amenage (8).

3. Unité suivant la revendication 1 ou 2, caractérisé en ce qu'un doigt (38) maintient l'expandeur (1a) pendant le transport sous l'ogive (10) où il est escamoté par un couteau (40), en étant rappelé dans sa position initiale par deux ressorts (42).

4. Unité suivant l'une quelconque des revendications 1, 2 et 3, caractérisé en ce qu'elle comporte un dispositif (12) de mise en place automatique de segments ouverts expansés au passage sur l'ogive correspondante (10), qui est constitué essentiellement par une pluralité de doigts (14) en matériau élastomère et à configuration de corolle inversée.

5. Unité suivant l'une quelconque des revendications 1 à 4, caractérisée en ce qu'une pince (18) à quatre doigts (20) se déplaçant parallèlement deux à deux permet de saisir le piston (16) et de le déposer sur une surface de référence.

6. Unité suivant l'une quelconque des revendications 1 à 5, caractérisé en ce qu'un plafond de reconformage (24) équipe le dispositif (12) de mise en place automatique de segments pour qu'en fin d'expansion, le lâcher du segment en extrémité d'ogive soit assuré.

**Claims**

1. An automatic unit for distributing and fitting piston rings, in particular composite piston rings, on pistons of internal combustion engines, of the type which is integrated in a robotised assembly line and provided with automatic means for gripping the pistons, detecting the type of pistons taken, initialising and referencing in respect of height the grooves of the pistons on the piston ring stacking cone members, and selecting and presenting the cone members, comprising a device for separation of resilient expanders using helical ramps which are intended to co-operate with the lateral edges of the expanders, said device for separation of resilient expanders (1a) which are generally referred to as "U-flex rings" being formed by two pairs of helical ramps (26, 27) and (28, 29) with opposite directions of winding, which are simultaneously driven by a toothed ring (30) and by an escape mechanism (32) which is actuated by a jack (34) capable of causing said ring to effect the portion of a revolution corresponding to a revolution of a helical ramp.

2. A unit according to claim 1 characterised in that it comprises a second device for separation of flat rings such as thin ring members (1b, 1c), which is formed by an automatic feed slider (8).

3. A unit according to claim 1 or claim 2 characterised in that a finger (38) holds the expander (1a) during transportation beneath the cone member (10) where it is retracted by a blade (40), being returned to its initial position by two springs (42).

4. A unit according to any one of claims 1, 2 and 3 characterised in that it comprises a device (12) for automatically fitting open rings which are expanded as they pass over the corresponding cone member (10), which is essentially formed a plurality of fingers ( 14 ) of elastomeric material and in the configuration of an inverted corolla.

5. A unit according to any one of claims 1 to 4 characterised in that a gripper (18) having four fingers (20) which are displaced in parallel relationship two by two permits the piston (16) to be gripped and deposited on a reference surface.

6. A unit according to any one of claims 1 to 5 characterised in that a reconformation ceiling member (24) equips the device (12) for automatically fitting piston rings so that at the end of the expansion phase release of the piston ring at the end of the cone member is guaranteed.


**Patentansprüche**

1. Automatische Einheit zum Verteilen und Setzen von Ringen, insbesondere Kompositringen, auf Kolben von Verbrennungsmaschinen, die in eine automatisierte Fertigungsstrasse integriert ist und die mit einer automatischen Anordnung versehen ist zum Ergreifen der Kolben, zum Feststellen des ergriffenen Kolbentyps, zur Einleitung und zur Höhenmarkierung der Ringnuten am Behälter mit gestapelten Segmenten, zur Auswahl und zur Bereitstellung von Behältern einschließlich einer Trennanordnung mittels elastischer Expander, welche schraubenförmige Spindeln verwenden, die mit den seitlichen Rändern der Expander zusammenwirken, wobei die Trennanordnungen mittels elastischer Expander (1a), die häufig U-Flex-Segmente genannt werden, aus zwei Paar schraubenförmiger Spindeln (26, 27 und 28, 29) mit gegensinniger Steigungsrichtung bestehen, die gleichzeitig durch einen Zahnkranz (30) angetrieben werden und aus einem durch einen Druckzylinder (34) steuerbaren Sperrmechanismus (32) besteht, der dem Zahnkranz eine teilweise Umdrehung erteilt entsprechend einer Umdrehung der schraubenförmigen Spindeln.

2. Einheit nach Anspruch 1, dadurch gekennzeichnet, daß sie eine zweite Trennanordnung für flache Segmente wie dünne Ringe (1b, 1c) aufweist, welche aus einem automatischen Zufuhrschieber (8) besteht.

3. Einheit nach Anspruch 1 oder 2, dadurch gekennzeichnet, daß ein Finger (38) den Expander (1a) während des Transportes unter den Behälter (10) festhält, wonach er durch ein Messer (40) gelöst wird und in seine Ursprungsstellung durch zwei Federn (42) zurückgezogen wird.

4. Einheit nach einem der Ansprüche 1, 2 und 3, dadurch gekennzeichnet, daß sie eine Anordnung (12) aufweist zur automatischen Plazierung der aufgeweiteten offenen Segmente während des Übergangs in den zugehörigen Behälter (10), bestehend im wesentlichen aus einer Vielzahl von Fingern (14) aus einem elastischen Material und mit dem Aufbau einer umgedrehten Krone.

5. Einheit nach einem der Ansprüche 1 bis 4, dadurch gekennzeichnet, daß eine Zange (18) mit vier Fingern (20), von denen sich jeweils zwei parallel zueinander verschieben können, das Ergreifen des Kolbens (16) und sein Absetzen auf einer Markierungsfläche ermöglicht.

6. Einheit nach einem der Ansprüche 1 bis 5, dadurch gekennzeichnet, daß die Anordnung (12) zur automatischen Plazierung der Segmente mit einer Abdeckung (24) versehen ist, um am Schluß der Ausdehnung eine Freigabe des Segmentes am Gehäuseende zu gewährleisten.

FIG.1

FIG.2

FIG. 3

FIG.5

FIG. 4

FIG. 8

38

FIG. 7

38

42

FIG. 6

FIG. 9